# EUROPEAN PATENT SPECIFICATION

(11) **EP 4 371 633 B1**
(45) Date of publication and mention of the grant of the patent: **29.04.2026**
(21) Application number: 22208539.1
(22) Date of filing: 21.11.2022
(51) Int. Cl.: A63F 9/12, B41J 2/01, B33Y 80/00, A63F 9/24, B29C 64/386, B33Y 50/00

(54) **BIG, CUSTOMIZED OBJECTS, METHOD OF PREPARATION OF BIG, CUSTOMIZED OBJECTS**
GROSSE, MASSGESCHNEIDERTE OBJEKTE, VERFAHREN ZUR HERSTELLUNG GROSSER, MASSGESCHNEIDERTER OBJEKTE
OBJETS DE GRANDE TAILLE PERSONNALISÉS, PROCÉDÉ DE FABRICATION D'OBJETS DE GRANDE TAILLE PERSONNALISÉS

(43) Date of publication of application: 22.05.2024
(73) Proprietor: Siemens Aktiengesellschaft, 80333 München (DE)
(72) Inventor: Votintseva, Anjelika, 81735 München (DE); Zabigailo, Maryna, 80796 München (DE)
(74) Representative: Siemens Patent Attorneys

(56) References cited:
- EP-A2- 0 682 964
- US-A1- 2012 232 857
- US-A1- 2015 290 532
- US-A1- 2018 063 641

## Description

The invention relates to a method to produce a big, customized objects like - for example - an avatar in human size for visualization of an individual to be present in so called "hybrid" meetings combining virtual and physical presence. Furthermore, the invention relates to a thus produced big, customized object.

For all kinds of prototyping, it is advantageous to have physical objects on hand. For all kinds of interaction, it is advantageous to have an idea of the personal appearance of the partners. Generative manufacturing like 3D printing allows a quick production of prototypes, however, big, customized objects are difficult to produce due to their volume.

During pandemic times participants of meetings became usually virtual meetings and people meanwhile are used to presence, hybrid, and virtual meetings equally. However, during so called hybrid-meetings, being meetings with virtual attendants and attendants in presence, the attendees in presence do have advantages.

So, it became evident that the socialization in the real world, physical presence not virtually, is still preferred. The visualization of an individual can be crucial for networking and productive collaboration. During the pandemic times the interaction between users shifted from physical presence to digital world. Nevertheless, people prefer to socialize in real world. This need inspires fair and conference organizer to propose hybrid meetings, combining virtual and physical presence that becomes very popular.

As people are used to interact with audio objects that create a 3D or spatial audio environment that provides the perception of point audio sourced in 3D space, people desire to have for visual interaction an equally overall impression.

The technical problem is how to improve a physical representation of an individual in a human-size format from the virtual part of the meeting to mate both worlds and to recreate the presence of a person for the effective mixed communication. The potential solution gives opportunity to caregivers, handicap, old and other people with travel limits to be present during the events despite disability.

On the other hand, 3D printing offers new possibilities for makers, creators, and professionals for personalized production. Nevertheless, the cost for devices as well as material cost is too high, when bigger objects have to be printed. Moreover, during the 3D printing process additional material in a form of support is required to dismiss misprints. All this also implies unnecessary load on the environment with higher printing time and more plastic material utilized.

There are several methods known to 3D print big objects like human bodies for example "makerBot", "druckzilla".

However, the technical problem is how to print objects this big and/or human size avatars in 3D. There are some big 3D printers known, like "Raise3DPro2Plus Series", "Stratasys F770", "bigrep", "Form 3L-Großformat-SLA-3D-Drucker" von "Formlabs".

Big printers as state of the art are generally too heavy, too big, and too expensive for a uncomplicated and therefor widespread use. The printed "state of the art" - results from these printers are not so easy to store and transport, while they represent a solid form. Moreover, the printed results become too expensive if they require numerous supports. As a result, small companies, private businesses, and makers are not able to afford large 3D printers and have to abandon possible opportunities.

US 2015/0290532 A1 relates to multi-dimensional puzzles designed for teaching, entertainment, and construction. It features two forms, one planar and one non-planar, each with multiple protrusions and recesses. These can be assembled by interconnecting the protrusions and recesses to create various multi-dimensional shapes, including cubes, cylinders, and spheres.

US 2018/0063641 Al teaches a dummy head with human-like facial features that includes microphones in both ears. The configuration of the facial features can be adjusted to capture binaural sound with different head-related impulse responses (HRIRs). The ears may be 3D scanned, 3D printed, and can then be attached to any head assembly.

In US 2012/0232857 Al a computer-implemented method is taught that creates a customized CAD model of a casting mold for molding a personalized device. The process involves acquiring a 3D model of the device through 3D scanning, generating the casting mold CAD model as a negative impression of the device, and defining sectioning of the mold using separation planes or splines. The mold is designed for rapid prototyping, such as 3D printing.

Thus, it is object of the present invention to provide a method to produce big, customized objects through a 3D printing method as well as it is object of the present invention to provide a big, customized object, being obtainable by 3D printing technique that overcomes the disadvantages of the state of the art.

This object is being solved by the method and the big, customized object as disclosed by the present description, figures, and claims.

The method according to the present invention is characterized in that it comprises the following production steps:
- Scanning of a body,
- Scaling a 3D model of the scan,
- Cutting of the 3D model into pieces,
- Transformation of the small pieces into porous structures
- 3D printing of the porous parts
- Assembling of the parts and
- Optionally treatment of the assembled body in order to optimize its visual appearance, for example decoration with additional accessories.

Besides, according to the invention a big, customized object comprising a number of parts being assembled by a lock and key model of small parts obtainable by commonly used 3D printing techniques is another object of the present invention.

Preferably, the step of "cutting the 3D model into pieces" is performed by means of parametric modelling in Grasshopper where cut parameters are defined by systems configuration, like the size of the currently available 3D printers. Grasshopper 3D is a visual programming language and environ-ment that runs within the Rhinoceros 3D computer-aided design application. Grasshopper is a plug-in included in the Rhinoceros 3D modeling software. It is a tool for algorithmic modelling, specifically used for designing and editing complex shapes through certain parameters.

Preferably, the 3D scanned body is an individual and/or a big, customized object to be reproduced. 3D-scanning of big objects like human size bodies is state of the art.

3D scanning is the process of analyzing a real-world object or environment to collect data on its shape and possibly its appearance, like its surface roughness, its color, surface appearance. The collected data can then be used to construct digital 3D models.

A 3D scanner can be based on many different technologies, each with its own limitations, advantages, and costs. Many limitations in the kind of objects that can be digitized are still present. For example, optical technology may encounter many difficulties with dark, shiny, reflective or transparent objects. For human's 3D models Computer Aided Designs "CAD" techniques may be used.

Alternatively, the scanning of a big body may be done with a regular scanning device like a mac and/or a regular mobile device like an iPhone, for example. The simplest way of doing is to use a phone/camera to take several pictures around the object and stitch them together using photogrammetry to create a 3D scan.

A real-world object and/or a physical environment and/or real environment in contrast to a virtual object refers to a physical object that people can sense and/or interact with without aid of electronic systems. Physical environment such as a physical things like bodies, environments like parks, include physical articles, or physical objects or real objects such as physical arms and legs, physical elements, and physical people. People can directly sense and/or interact with the physical environment, such as through sight, touch, hearing taste and/or smell.

After scanning of the body and scaling of the 3D model- or alternatively choosing of a given 3D standardized model -, the model is being cut into pieces. This transformative feature splits a 3D model into parts for printing in the form of 3D puzzle, for example. Puzzle pieces or parts obey the so-called lock and key model and may be assembled quite simply. This is one preferred embodiment of the present invention to cut the 3D model of the scan into pieces for printing in the form of puzzle parts.

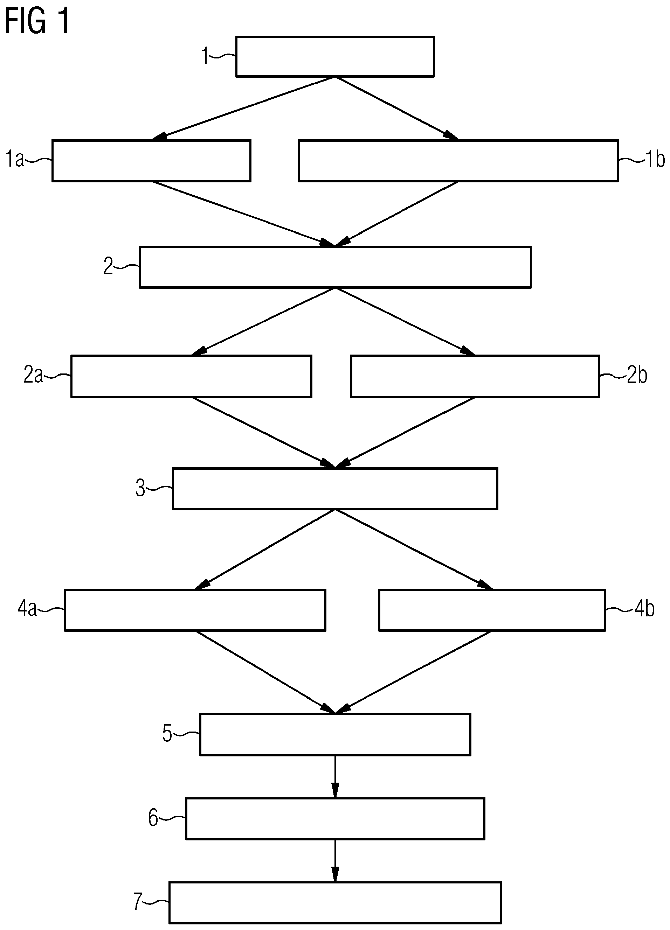

One example of the method according to the invention will be explained in more detail referring to a preferred embodiment being visualized in figure 1:
Starting from top to bottom the method may involve the following process steps:
Step 1: select 3D model
Step 1a - alternative a): scan own model
Step 1b - alternative b): select a standard and customize
Step 2: define 3D printing parameters (example: L-B-H or weight)
Step 2a - alternative a): Define own parameter values
Step 2b - alternative b): Select from standard settings
Step 3: Calculation of 3D puzzle pieces
Step 4a - alternative a): individual 3D printing of calculated parts
Step 4b - alternative b): Search for available parts from inventory
Step 5: Assemble internal layers
Step 6: Adjust external surface parts
Step 7: Integrate electronics to big, customized object

The scheme of figure 1 demonstrates the overall process described with details further in this document. The alternatives on the right side of the scheme (variants b.) refer to a lower cost version of an avatar, whereas the alternatives on the left side a) correspond to a more personalized and expensive one.

The selection of the 3D model - process step 1 - may be done - see alternative 1a - by scanning of an own model as well as -see alternative 1b - by selecting a standard model that has been provided from the program and/or from earlier scanning of models. These standard models are deposited in a kind of toolbox or memory to be easily available. Such a standard model may be taken as it is or may be customized, e.g. it can be scaled to fit to the customer's height or other size. Such a customized model is based on the chosen standard model and has individualization like - in the case that the model is a human body, the shape of the body, the color of hair, eyes, skin, nails, length of legs, arms, or some other features, like it is common knowledge.

When the model is finished, the process step 2 of defining the 3D parameters is next. Defining the 3D parameters means finding out what size of pieces would be suitable to have them 3D printed by the 3D printer that is available. Accordingly, the user may either define its own parameters - see step 2a - , especially when the 3D model is an individually scanned model and not based on a standard, or the user may select the printing parameters from standard settings - see step 2b.

After defining the 3D printing parameters in length - "L", width or breadth "B", height "H", the calculation of the 3D puzzle pieces is being initiated - see step 3.

The calculation of the puzzle pieces or parts - being the build-up elements of the big, customized object - may be done by different mathematical approaches for the cutting algorithm and languages, one of the possible approaches being Grasshopper in connection with Rhinoceros as mentioned above. See process step 4a as shown in figure 1.

However, parts of customer specific size will make reuse and component exchange among different avatars more difficult, when they are produced in quite some amount e.g. for conferences and/or fairs where avatars may be used to replace personal presence.

For the alternative, where the user choses a standard model - see alternative 2b in the process as shown in figure 1 - there might be basic parts for the build-up of the object or avatar available in a toolbox and do not have to be printed individually - see process step 4b. These parts may be produced as mass products and accordingly cheaper.

Standard size for parts makes it possible to reuse parts in different products and/or avatars to reduce material usage and make production cheaper and more sustainable. Besides, it allows cheap and fast exchange and/or reparation.

The production of the small parts includes the calculation of their porous structure according to the customer parameters (e.g., wished weight for each part).

Process step 5 covers the assembly of the build-up parts first of internal layers of the avatar or object, process step 6 covers the assembly of the outer and external surface parts and - last but not least - process step 7 of the through figure 1 disclosed preferred embodiment of the method of the invention step 7 is the adding, incorporation, and integration of electronics to the avatar. Electronics may be one or more selected from the group of screens, microphone, speaker, camera, engine...

Devices for interaction with physically present persons may be available and exchangeable.

Generally spoken, once the parts are on hand, respective the printing is done, the avatar can be assembled quickly as a puzzle and re-assembled for storage and/or transportation.

The term "avatar" is used for any artificial person, serving as a representative of a person in the physical, real world. According to the invention, an avatar is basically constructed by assembling a number of parts, preferably assembled by a lock and key mode or, in other words, by 3D puzzle parts. The avatar may have all kinds of supplementary devices, such as microphone(s), speaker(s), screen(s), movable parts like hands, feet, etc. The avatar may be mounted on a movable ground plate with an engine, for example. An avatar that is built up on a base plate with remote control and engine may move on its own and/or may be moved from distance over IoT.

In order to define what is meant by "big" object, big feres to an object which is not being printable by commonly used 3D printers, like an avatar in human size.

The parts being assembled to built up the "big" object or human size avatar are compared thereto "small". Accordingly does "small" mean being printable by commonly used 3D printers. For example, a printable size object could have the measures of 10x10 or 20x20 cm. "Small" can be bigger, if the printer is quite big.

Small parts can be standard parts, like parts of legs, arms, which is advantageous because this will allow easy preparation, repair, exchange and so on...

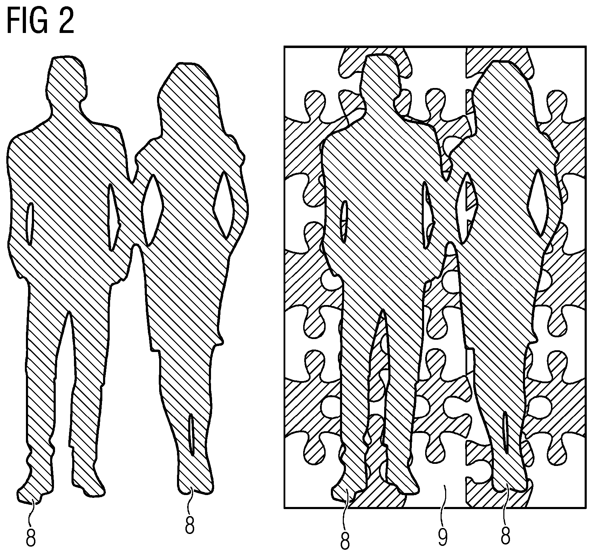

Figure 2 shows another example according to the present invention, a human couple 8 showing man and woman as drawn on the left side 8, is represented in front of a puzzle-background 9 to give an example of the size of parts that will be assembled to built up one or two avatar(s) 8, and also an example how the models will be cut (as observed from one perspective) While the inner parts of the avatar - see process step 5 of figure 1 - may be cubicle other parts of the human bodies will keep the curvatures.

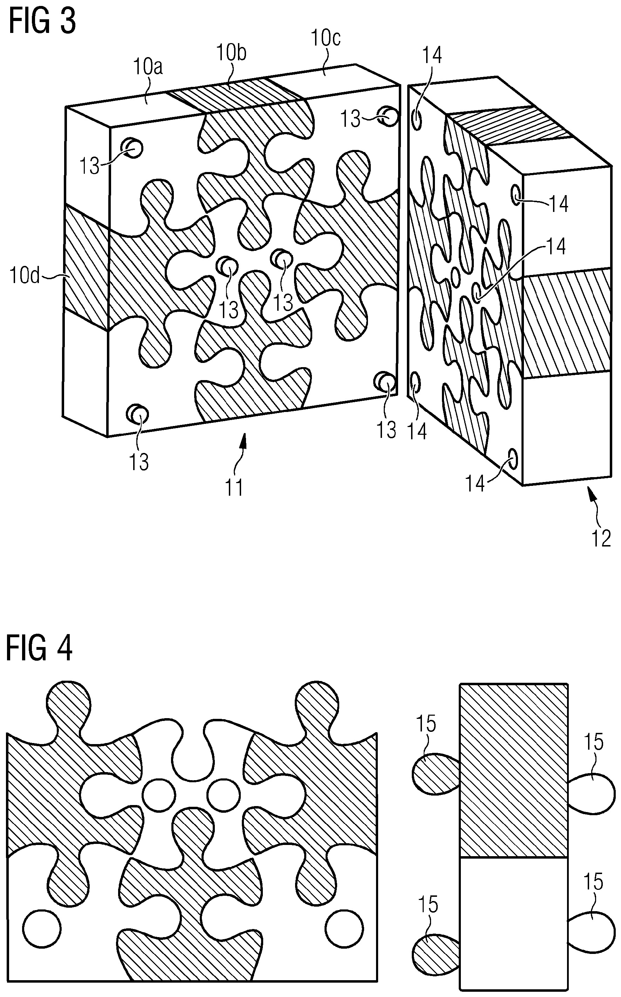

Figure 3 shows several puzzle parts 10a, 10b, 10c, 10d ...of a first layer 11 and a second layer 12 of an assembled object - not shown-. The puzzle parts of one layer may be assembled with the puzzle parts of a second layer by knops 13 and holes 14 as shown.

The connector between parts may be the fitting of knops 13 and holes 14 as shown in figure 3.

Besides, the connector may be in form of a lightbulb 15 as shown in figure 4.

As shown in figure 3 and 4, the edges of the puzzle parts may be different or equal, having sharp or round corner, as wanted.

Further the puzzle parts do not need to comprise the complete surface, it may be enough to have a common frame, while the part itself may be hollow.

One preferred embodiment of the printed puzzle part is to build it avoiding supporting structures during the print process. According to one preferred embodiment a cutting algorithm calculates the slops and guarantees that they are all kept below 45°. For example, the puzzle parts have a spheric shape or 45-degree angles to dismiss supports in the printing process. 45-degree rule states that slopes less than or equal to 45 degrees can be printed without supports.

As a preferred embodiment of the invention the parts are constructed so that each part has at least one flat surface without curvature on this surface. This surface will be the bottom of the part during 3D printing. All connecting knops and holes are on the sides of the piece perpendicular to the bottom surface or on the top of the piece (see figures 3 & 4). To connect different layers with each other, pieces within each layer are connected alternating the direction of their flat side. For example, all white pieces will have their flat sides in front and all other pieces - on the back side of the layer.

The parts or pieces of a big, customized object according to the present invention may be equal or different.

This technique offers additional opportunities for cost reduction due to overall printing material minimization and reduction of the post-processing time.

Another advantageous aspect of the invention is the variation and quality of the printed parts that may vary in different ways.

To save material and weight, it may be advantageous to print the parts with low density. This means that printed parts of a porous structure built up at least as stable an avatar as heavy full dense parts. However, low density parts are easier to be transported, assembled, and save material and print costs.

Basically, the term "pieces" is used for the calculated pieces of the 3D model, being virtual, while the term "parts" is used for the printed physical parts.

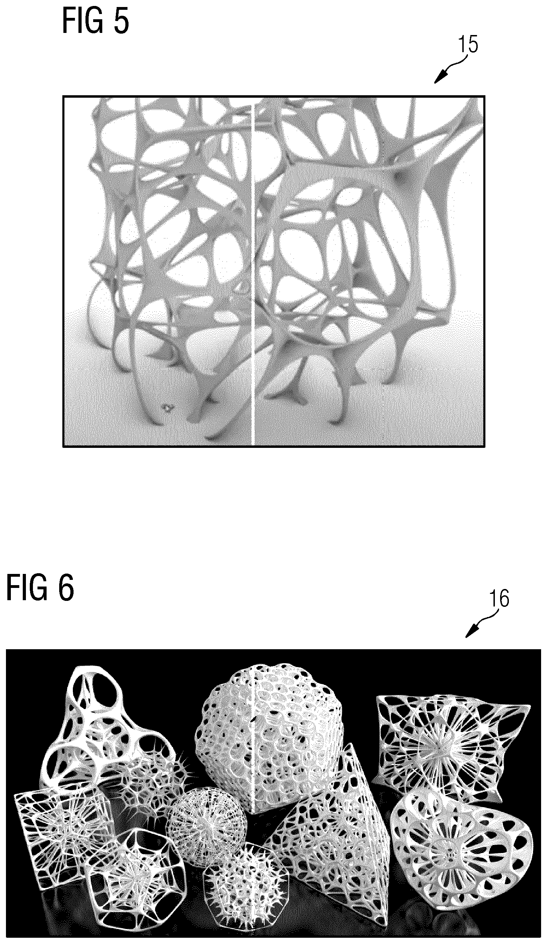

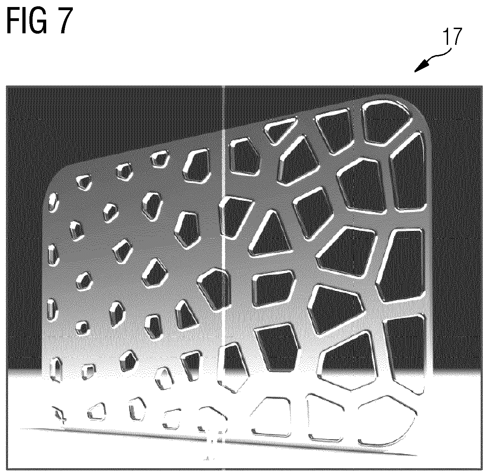

Figure 5 shows an example of a porous structured printed part 15. Such a part may also be calculated and generated by parametric modeling with Grasshopper as mentioned above. Such a porous structured part reduces some important parameters like printing weight, printing material, costs and printing time.

Another possibility is to use Voronoi structure for the surface only and exclude the filament inside of the avatar. This is shown in figure 6, where examples of 3D printed objects 16, realizing Voronoi structures are shown. This can be achieved by Rhino/Grasshopper with Voronator, Voronoi plug in, Fusion360 with the 3D Voronoi add-in, Dynamo, nTopology, and Blender with scripting.

Besides, it is possible to have different densities realized within one printed part. This applies for more sophisticated forms.

In case Voronoi structure is applied to the sophisticated forms, the Voronoi curve attractor line approach can be used to perform calculation. The winding areas stay solid, but the rest is transformed to porous structure. There are 2 possibilities to arrange the appearance of the outermost pieces:
The outermost surface of the avatar may be printed solid with a thin layer. Only the internal structure will be porous.

Alternatively, the whole avatar, all pieces, will be printed porous as shown on Figure 6. In this case, the avatar can be customized further filled in with foam, cloth or threads of different colors, still keeping weight very low. Different colors will imitate personal cloth style, hair style, other design solutions.

The parametric cutting algorithm can also calculate the form of the avatar's head with a place for a LCD display on the front side. The display will be connected to a microcontroller with the internet capability (connected to the conference's WiFi). This display will show the face of the owning participants, who wants to participate remotely from a different location and still interact with other participants in a natural physical way (not only in the virtual meeting rooms). Just above or below the display there will be a webcam mounted, which will transfer the environment to the remote participant owning this avatar.

Currently there is no technology on the market, which offers a puzzle transformation for additive manufacturing. The advantages of this invention are represented by ability to print large parts and not only prepare personalized avatars for better user experience, but also it can be applied for any other large item, which makes it convenient. This technology offers stability due to the puzzle form and can be used for more sophisticated 3D models.

Currently available 2D Photo Avatars do not provide authentic view for the participants. They are not customizable and not reusable. Their production requires large printers, large wood/cardboard plates. They cannot hide electronic due to their 2D flat nature.

The body parts can be reused for the new avatars, which makes this invention sustainable and multifunctional. To achieve this, it is necessary to create two models: one model for a head (one puzzle) and another for the body (another puzzle).

Currently there are no solutions on the market, that offer puzzle technology for big objects. The advantages of puzzle technique are represented by:
▪ Opportunity to print big objects with a usual printer → sustainable
▪ Quick assembling of a printed object like a puzzle and reusage → convenient & sustainable
▪ Reduced material cost due to porous structure → less material cost and a shorter printing time (less energy consumption)
▪ Reassembling due to modular structure → better storage
▪ Absence of support with 45-degree angles approach → material cost reduction and post-processing time reduction

Due to its modular nature, all the parts can be reassembled and reused that makes this approach sustainable.

Independent of the grammatical term usage, individuals with male, female or other gender identities are included within the term.

The invention uses the puzzle method to calculate parts of a model, like a human size avatar which are printable by commonly used 3D printers. The invention relates to a method to produce a big, customized objects like - for example - an avatar in human size for visualization of an individual to be present in so called "hybrid" meetings combining virtual and physical presence. Furthermore, the invention relates to a thus produced big, customized object.

Looking the additional features of the avatar like the supplementary electronic devices, it becomes obvious, that from a very cheap and silent avatar like not leaving his corner during the meeting to a very lively avatar, looking around, answering questions, and moving around everything may be realized with the technique according to the present invention. This makes such avatars even more customizable for different prize levels.

Such avatars can be used not only for hybrid conferences, but also in all kinds of interactive communication with client, family etc. In this sense a thus constructed avatar may serve as a kind of customized baby-phone - in form and size of a mother /grandmother/etc. - or as caregivers in different facilities for elderly people or disabled patients as well as for peds care.

## Claims

1. Big, customized object comprising at least two or more parts obtainable by commonly used 3D printers, being assembled by a lock and key model of small parts having as a construction template either scanned and/or calculated pieces which may be standard and/or individualized, the pieces being transformed at least partly into porous structures before printing, wherein said big object is not printable by commonly used 3D printers, in particular an avatar in human size, wherein each of said at least two or more parts is printable by commonly used 3D printers, in particular having a printable size in the double-digit cm range, such as 10x10 to 20x20 cm.

2. Big, customized object according to claim 1, being the replication of a human and/or being an avatar in human size, having at least arms, legs, middle of the body and a head.

3. Big, customized object according to claim 2, being mounted on a base plate.

4. Big, customized object according to claim 3, where the base plate comprises a technical device to move on its own, optionally from distance.

5. Big, customized object according to one of claims 1 to 4, where at least some of the small parts form 3D puzzle parts.

6. Big, customized object according to claim 5, where at least some of the small parts which are constructed as 3D puzzle parts have at least one flat side to be mounted on a 3D printer.

7. Big, customized object according to one of claims 2 to 6, having electronic devices such as screens, camera, microphone, and/or speaker incorporated.

8. Big, customized object according to claims 2 and 7, having electronic devices arranged at the head.

9. Method for producing a big, customized object, the method comprising the following production steps:
- Scanning of a body,
- Scaling a 3D model of the scan,
- Cutting of the 3D model into pieces obeying a lock and key model,
- transforming at least partly the pieces into porous structures before printing,
- 3D printing of the porous structures into parts,
- Assembling of the parts, whereby said big object is not printable by commonly used 3D printers, in particular an avatar in human size, whereby each of said parts is printable by commonly used 3D printers, in particular having a printable size in the double-digit cm range, such as 10x10 to 20x20 cm.

10. Method according to claim 9 further comprising the step of post-processing treatment of the assembled body in order to optimize its visual appearance.

11. Method according to one of claims 9 or 10, further comprising the step of incorporating electronic devices into the big, customized object.

12. Method according to one of claims 9 to 11, involving a calculation and/or printing step of 3D parts by parametric modeling.

13. Method according to one of claims 9 to 12, involving a calculation and/or printing step of 3D parts using a computer program product that is based on the principle of Voronoi decomposition of a given body.

## Patentansprüche

1. Großes, maßgeschneidertes Objekt, das mindestens zwei oder mehr Teile umfasst, die durch allgemein gebräuchliche 3D-Drucker erhältlich sind, die durch ein Schloss-und-Schlüssel-Modell aus kleinen Teilen zusammengebaut sind, die als Konstruktionsvorlage entweder gescannte und/oder berechnete Stücke aufweisen, die Standard- und/oder individualisierte Stücke sein können, wobei die Stücke vor dem Drucken mindestens teilweise in poröse Konstruktionen umgewandelt werden, wobei das besagte große Objekt nicht durch allgemein gebräuchliche 3D-Drucker druckbar ist, insbesondere ein Avatar in menschlicher Größe, wobei jedes der besagten mindestens zwei oder mehr Teile durch allgemein gebräuchliche 3D-Drucker druckbar ist, insbesondere mit einer druckbaren Größe im zweistelligen cm-Bereich, wie etwa 10x10 bis 20x20 cm.

2. Großes, maßgeschneidertes Objekt nach Anspruch 1, das die Nachbildung eines Menschen ist und/oder ein Avatar in menschlicher Größe ist, das mindestens Arme, Beine, eine Körpermitte und einen Kopf aufweist.

3. Großes, maßgeschneidertes Objekt nach Anspruch 2, das auf einer Basisplatte montiert ist.

4. Großes, maßgeschneidertes Objekt nach Anspruch 3, wobei die Basisplatte eine technische Vorrichtung umfasst, um sich von selbst zu bewegen, optional aus der Ferne.

5. Großes, maßgeschneidertes Objekt nach einem der Ansprüche 1 bis 4, wobei mindestens einige der kleinen Teile 3D-Puzzleteile bilden.

6. Großes, maßgeschneidertes Objekt nach Anspruch 5, wobei mindestens einige der kleinen Teile, die als 3D-Puzzleteile konstruiert sind, mindestens eine flache Seite aufweisen, um auf einem 3D-Drucker montiert zu werden.

7. Großes, maßgeschneidertes Objekt nach einem der Ansprüche 2 bis 6, in das elektronische Vorrichtungen wie etwa Bildschirme, Kamera, Mikrofon und/oder Lautsprecher integriert sind.

8. Großes, maßgeschneidertes Objekt nach den Ansprüchen 2 und 7, das elektronische Vorrichtungen aufweist, die an dem Kopf angeordnet sind.

9. Verfahren zum Herstellen eines großen, maßgeschneiderten Objekts, wobei das Verfahren die folgenden Produktionsschritte umfasst:
- Scannen eines Körpers,
- Skalieren eines 3D-Modells des Scans,
- Schneiden des 3D-Modells in Stücke, die einem Schloss-und-Schlüssel-Modell folgen,
- mindestens teilweises Umwandeln der Stücke in poröse Konstruktionen vor dem Drucken,
- 3D-Drucken der porösen Konstruktionen in Teile,
- Zusammenbauen der Teile, wobei das besagte große Objekt nicht durch allgemein gebräuchliche 3D-Drucker druckbar ist, insbesondere ein Avatar in menschlicher Größe, wobei jedes der besagten Teile durch allgemein gebräuchliche 3D-Drucker druckbar ist, insbesondere mit einer druckbaren Größe im zweistelligen cm-Bereich, wie etwa 10x10 bis 20x20 cm.

10. Verfahren nach Anspruch 9, ferner umfassend den Schritt der Nachbearbeitungsbehandlung des zusammengebauten Körpers, um dessen visuelles Erscheinungsbild zu optimieren.

11. Verfahren nach einem der Ansprüche 9 oder 10, ferner umfassend den Schritt des Integrierens von elektronischen Vorrichtungen in das große, maßgeschneiderte Objekt.

12. Verfahren nach einem der Ansprüche 9 bis 11, das einen Berechnungs- und/oder Druckschritt von 3D-Teilen durch parametrische Modellierung einbezieht.

13. Verfahren nach einem der Ansprüche 9 bis 12, das einen Berechnungs- und/oder Druckschritt von 3D-Teilen unter Verwendung eines Computerprogrammprodukts einbezieht, das auf dem Prinzip der Voronoi-Zerlegung eines gegebenen Körpers basiert.

## Revendications

1. Objet de grande taille personnalisé comprenant au moins deux parties ou plus pouvant être réalisées par des imprimantes 3D couramment utilisées, assemblé selon un principe de clé et serrure à partir de petites parties ayant comme modèle de construction des pièces scannées et/ou calculées qui peuvent être standard et/ou personnalisées, les pièces étant transformées au moins en partie en structures poreuses avant l'impression, dans lequel ledit objet de grande taille n'est pas imprimable par des imprimantes 3D couramment utilisées, en particulier un avatar de taille humaine, dans lequel chacune desdites au moins deux parties ou plus est imprimable par des imprimantes 3D couramment utilisées, en particulier ayant une taille d'impression de l'ordre de plusieurs dizaines de centimètres, telle que 10x10 à 20x20 cm.

2. Objet de grande taille personnalisé selon la revendication 1, l'objet étant la reproduction d'un être humain et/ou étant un avatar de taille humaine, ayant au moins des bras, des jambes, un milieu du corps et une tête.

3. Objet de grande taille personnalisé selon la revendication 2, l'objet étant monté sur une plaque de base.

4. Objet de grande taille personnalisé selon la revendication 3, dans lequel la plaque de base comprend un dispositif technique permettant de la déplacer de manière autonome, facultativement à distance.

5. Objet de grande taille personnalisé selon l'une des revendications 1 à 4, dans lequel au moins certaines des petites parties forment des éléments de puzzle en 3D.

6. Objet de grande taille personnalisé selon la revendication 5, dans lequel au moins certaines des petites parties construites comme des pièces de puzzle 3D présentent au moins une face plate pour être montées sur une imprimante 3D.

7. Objet de grande taille personnalisé selon l'une des revendications 2 à 6, incorporant des dispositifs électroniques tels que des écrans, une caméra, un microphone et/ou un haut-parleur.

8. Objet de grande taille personnalisé selon les revendications 2 et 7, comportant des dispositifs électroniques disposés au niveau de la tête.

9. Procédé de fabrication d'un objet de grande taille personnalisé comprenant les étapes de fabrication suivantes :
- numérisation d'un corps,
- mise à l'échelle d'un modèle 3D issu de la numérisation,
- découpe du modèle 3D en pièces s'emboîtant selon un principe de clé et serrure,
- transformation des pièces au moins en partie en structures poreuses avant l'impression,
- impression 3D des structures poreuses pour obtenir des parties,
- assemblage des parties, dans lequel ledit objet de grande taille n'est pas imprimable par des imprimantes 3D couramment utilisées, en particulier un avatar de taille humaine, dans lequel chacune desdites parties est imprimable par des imprimantes 3D couramment utilisées, en particulier ayant une taille d'impression de l'ordre de plusieurs dizaines de centimètres, telle que 10x10 à 20x20 cm.

10. Procédé selon la revendication 9, comprenant en outre l'étape consistant à soumettre le corps assemblé à un traitement de finition afin d'optimiser son aspect visuel.

11. Procédé selon l'une des revendications 9 ou 10, comprenant en outre l'étape consistant à intégrer des dispositifs électroniques dans l'objet de grande taille personnalisé.

12. Procédé selon l'une des revendications 9 à 11, comprenant une étape de calcul et/ou d'impression de pièces en 3D par modélisation paramétrique.

13. Procédé selon l'une des revendications 9 à 12, comprenant une étape de calcul et/ou d'impression de pièces en 3D utilisant un produit de programme informatique et reposant sur le principe de la décomposition de Voronoi d'un corps donné.
